# EUROPÄISCHE PATENTSCHRIFT

(11) **EP 2 516 897 B1**
(45) Veröffentlichungstag und Bekanntmachung des Hinweises auf die Patenterteilung: **25.02.2015**
(21) Anmeldenummer: 11784600.6
(22) Anmeldetag: 15.11.2011
(51) Int. Cl.: F16H 61/662, F16H 61/00

(54) **VERFAHREN ZUR EINSTELLUNG DES ARBEITSDRUCKES EINES GETRIEBES**
METHOD FOR SETTING THE WORKING PRESSURE OF A TRANSMISSION
PROCEDE DE REGLAGE DE LA PRESSION DE SERVICE D'UNE TRANSMISSION

(30) Priorität: 25.11.2010 DE 102010052337
(43) Veröffentlichungstag der Anmeldung: 31.10.2012
(73) Patentinhaber: Voith Patent GmbH, 89522 Heidenheim (DE)
(72) Erfinder: HÖFIG, Bernhard, 89518 Heidenheim (DE); GERLICH, Michael, 89555 Königsbronn (DE); REIK, Michael, 89073 Ulm (DE); WURSTER, Christoph, 89173 Lonsee (DE)
(74) Vertreter: Dr. Weitzel & Partner
(86) Internationale Anmeldenummer: PCT/EP2011/005736
(87) Internationale Veröffentlichungsnummer: WO 2012/069152

(56) Entgegenhaltungen:
- EP-A1- 1 507 101
- WO-A1-95/09741
- DE-B3- 10 358 005
- DE-B4- 19 634 761
- DE-C2- 3 542 956
- DE-C2- 3 630 768
- DE-C2- 3 630 792
- DE-C2- 3 729 463
- GB-A- 1 261 956
- US-A- 4 785 689
- US-A- 4 805 750
- US-A- 4 958 538
- US-A- 5 400 678
- US-A- 5 458 545
- US-A- 5 911 244
- US-A1- 2005 221 948

## Beschreibung

Die Erfindung betrifft ein Getriebe, beispielsweise stufenloses Getriebe oder Schaltgetriebe, insbesondere Kraftfahrzeugschaltgetriebe, und hier ein Verfahren zur Einstellung des Arbeitsdruckes im Getriebe, im Einzelnen gemäß dem Oberbegriff des Patentanspruchs 1.

Die US 5,400,678 offenbart ein Verfahren mit den Merkmalen des Oberbegriffs des Anspruchs 1.

Schaltgetriebe, in welchen Kupplungen, Bremsen, eine hydrodynamische Kupplung und/oder ein hydrodynamischer Wandler wahlweise mit einem einen Arbeitsdruck führenden Medium beaufschlagbar sind, um die Übersetzung der Drehzahl und/oder des Drehmomentes zwischen einer Getriebeeingangswelle und einer Getriebeausgangswelle durch Öffnen und Schließen der Kupplungen und/oder Bremsen und/oder durch hydrodynamische Leistungsübertragung mit der hydrodynamischen Kupplung und/oder dem hydrodynamischen Wandler zu variieren, und Steuervorrichtungen zum Einstellen des Arbeitsdruckes werden beispielsweise in den folgenden Dokumenten beschrieben:
DE 35 42 956 C2
DE 36 30 792 C2
DE 43 33 899 A1
DE 699 28 730 T2
DE 103 58 005 B3
DE 196 34 761 B4
DE 37 29 463 C2
DE 36 30 768 C2.

Die Verfahren, nach welchen diese Steuervorrichtungen arbeiten, sehen eine stufenlose Veränderung des Arbeitsdruckes in Abhängigkeit verschiedener Größen, beispielsweise des eingelegten Ganges, der Leistung eines Antriebmotors, der das Getriebe antreibt, in Abhängigkeit eines Schaltvorgangs oder anhand der Unterscheidung zwischen dem Traktionsbetrieb und dem Schubbetrieb des Antriebsmotors vor. Beispielsweise wird der Steuerdruck, der sich auf den Arbeitsdruck auswirkt, proportional zur Motorlast eingestellt.

Durch die bekannten Verfahren zur stufenlosen Veränderung des Arbeitsdruckes kann eine unnötige Leistungsaufnahme der Pumpe, in der Regel Ölpumpe, die das den Arbeitsdruck führende Medium, insbesondere Öl, fördert, um dieses auf den gewünschten Druck zu bringen, vermieden werden, indem nur so viel Arbeitsdruck erzeugt wird, wie anhand von den genannten Abhängigkeiten als ausreichend angesehen wird. Problematisch bei einer solchen stufenlosen Einstellung des Arbeitsdruckes ist jedoch der verhältnismäßig große Aufwand. Beispielsweise müssen regelbare beziehungsweise steuerbare Pumpen vorgesehen sein.

Ein weiterer Nachteil der bekannten Verfahren liegt darin, dass zum einen aufgrund von Fertigungstoleranzen und zum anderen aufgrund von Verschleiß über der Betriebszeit der sich tatsächlich einstellende Arbeitsdruck von den gewählten theoretischen Vorgaben und Abhängigkeiten abweichen kann. Dies kann dazu führen, dass, besonders mit zunehmendem Alter des Getriebes beziehungsweise des im Getriebe verwendeten Öls, eine unerwünschte Erniedrigung des Arbeitsdruckes auftritt, was zu Fehlansteuerungen im Getriebe und zu einem erhöhten Verschleiß der an Schaltvorgängen beteiligten Komponenten, insbesondere der Kupplungen und Bremsen führen kann.

Der vorliegenden Erfindung liegt die Aufgabe zugrunde, ein Verfahren zur Einstellung des Arbeitsdruckes eines Getriebes, beispielsweise in Form eines Schaltgetriebes oder stufenlosen Getriebes insbesondere für ein Kraftfahrzeug anzugeben, das bezüglich der genannten Problematik verbessert ist. Vorteilhaft soll sich das Verfahren durch eine kostengünstige Integrierbarkeit in bestehende oder neue Getriebe mit geringem zusätzlichen gerätetechnischem Aufwand auszeichnen.

Die erfindungsgemäße Aufgabe wird durch ein Verfahren mit den Merkmalen von Anspruch 1 gelöst. In den abhängigen Ansprüchen sind vorteilhafte und besonders zweckmäßige Ausgestaltungen der Erfindung angegeben.

Das erfindungsgemäße Verfahren zur Einstellung des Arbeitsdruckes eines Getriebes, beispielsweise stufenlosen Getriebes oder Schaltgetriebes, insbesondere Kraftfahrzeugschaltgetriebes, wobei das Getriebe Kupplungen, Bremsen, Aktuatoren, eine hydrodynamische Kupplung und/oder einen hydrodynamischen Wandler aufweist, die wahlweise mit einem den Arbeitsdruck führenden Medium beaufschlagbar sind, um die Übersetzung der Drehzahl und/oder des Drehmomentes zwischen einer Getriebeeingangswelle und einer Getriebeausgangswelle durch Öffnen und Schließen der Kupplungen und/oder Bremsen, durch Betätigen der Aktuatoren und/oder durch hydrodynamische Leistungsübertragung mit der hydrodynamischen Kupplung und/oder dem hydrodynamischen Wandler zu variieren, sieht gemäß einer ersten Ausführungsform vor, den Arbeitsdruck zwischen einem konstanten Nennwert und einem konstanten relativ zu dem Nennwert kleineren, das heißt abgesenkten Wert zu schalten. Gemäß einer alternativen Ausführungsform wird der Arbeitsdruck in drei oder mehr Stufen oder stufenlos von einem Nennwert auf einen abgesenkten Wert reduziert.

In beiden Fällen wird nun eine unzulässige Absenkung des Arbeitsdruckes, mit dem Ziel Antriebsleistung beziehungsweise Kraftstoff zu sparen, wobei durch Einflüsse wie beispielsweise Verschleiß oder Fertigungstoleranzen der Arbeitsdruck weiter absinkt als gewollt, dadurch verhindert, dass eine Drehzahldifferenz zwischen der Getriebeeingangswelle und der Getriebeausgangswelle und/oder zwischen der Eingangsseite und der Ausgangsseite wenigstens einer Kupplung, Bremse, der hydrodynamischen Kupplung und/oder dem hydrodynamischen Wandler erfasst und mit einer vorgegebenen Solldifferenz verglichen wird. Das Schalten oder Reduzieren des Arbeitsdruckes erfolgt nun erfindungsgemäß in Abhängigkeit des Ergebnisses dieses Vergleichs.

Vorteilhaft wird dabei zunächst der Arbeitsdruck abgesenkt und anschließend die Drehzahldifferenz erfasst und mit einer vorgegebenen Solldifferenz verglichen. In Abhängigkeit dieses Vergleichs, insbesondere wenn die Drehzahldifferenz größer als die Solldifferenz ist, wird die Absenkung des Arbeitsdruckes teilweise oder vollständig rückgängig gemacht beziehungsweise der Arbeitsdruck um ein vorgegebenes Ausmaß erhöht.

Gemäß der Erfindung erfolgt die Absenkung des Arbeitsdruckes grundsätzlich in Abhängigkeit einer Eingangsgröße, die die Zulässigkeit des Schaltens beziehungsweise Absenkens beschreibt, beispielsweise in Abhängigkeit der an der Getriebeeingangswelle anliegenden Antriebsleistung beziehungsweise des dort anliegenden Momentes oder in Abhängigkeit der aktuellen Motorenleistung eines Antriebsmotors, insbesondere Verbrennungsmotors, welcher die Getriebeeingangswelle antreibt. Die erfindungsgemäße Berücksichtigung der Drehzahldifferenz zwischen der Getriebeeingangswelle und der Getriebeausgangswelle beziehungsweise der zuvor genannten Bauteile erfolgt zusätzlich zu der Abhängigkeit des Schaltens beziehungsweise Reduzierens von der genannten Eingangsgröße. Somit stellt die Berücksichtigung der Drehzahldifferenz eine überlagerte Sicherheitsabfrage dar, die verhindert, dass Veränderungen in der Abhängigkeit des Arbeitsdruckes von der genannten Eingangsgröße zu einem unerwünschten Schlupf im Getriebe beziehungsweise den dort vorgesehenen Komponenten führen.

Als Größe (Eingangsgröße), welche die Zulässigkeit des Schaltens des Arbeitsdruckes auf den abgesenkten Wert oder Reduzierens des Arbeitsdruckes auf den abgesenkten Wert beschreibt, kommen zusätzlich oder alternativ zu dem genannten an der Getriebeeingangswelle anliegenden Drehmoment beziehungsweise der an der Getriebeeingangswelle anliegenden Leistung auch eine oder mehrere andere Größen in Betracht, beispielsweise das an der Getriebeausgangswelle anliegende Drehmoment, die an der Getriebeausgangswelle anliegende Leistung, die Drehzahl der Getriebeeingangswelle und/oder die Drehzahl der Getriebeausgangswelle, das Motorschleppmoment sowie die an einem Nebenantrieb oder an einem Nebenabtrieb des Getriebes anliegende Leistung beziehungsweise das dort anliegende Moment. Wenn beispielsweise an einem Nebenantrieb des Getriebes eine zweite Antriebsmaschine, insbesondere ein Elektromotor oder Dampfmotor angeschlossen ist, insbesondere um einen Hybridantriebsstrang zur Verfügung zu stellen, mit der Hauptantriebsmaschine angeschlossen an der Getriebeeingangswelle, so kann die Leistungsabgabe des am Nebenantrieb angeschlossenen Motors zu einem vergleichsweise höheren Moment im Schaltgetriebe beziehungsweise an den dort vorgesehenen Kupplungen oder Bremsen führen, was eine Absenkung oder Reduzierung des Arbeitsdruckes verbietet. Entsprechendes gilt beispielsweise für eine an einem Nebenabtrieb des Getriebes angeschlossene Bremse, beispielsweise einen hydrodynamischen Retarder.

Für die die Zulässigkeit des Schaltens auf den abgesenkten Wert oder Reduzierens des Arbeitsdruckes beschriebene Größe wird ein Grenzwert vorgegeben, und das Schalten oder Reduzieren erfolgt nur bei Erfassen einer die Zulässigkeit des Schaltens oder Reduzierens beschreibenden Größe, welche unterhalb des Grenzwertes liegt. Um nun die überlagerte Berücksichtigung des Schlupfes zwischen der Getriebeeingangswelle und der Getriebeausgangswelle beziehungsweise einer oder mehrere einzelner Komponenten in Getrieben auszuführen, wird der Grenzwert in Abhängigkeit des Ergebnisses des Vergleichs der Drehzahldifferenz mit der vorgegebenen Solldifferenz verändert.

Besonders vorteilhaft wird der Grenzwert bei einer Drehzahldifferenz oberhalb der Solldifferenz erniedrigt.

Beispielsweise kann der Grenzwert aus dem Produkt einer Sollgröße und einem Anpassungsfaktor gebildet werden, und der Anpassungsfaktor bei einer Drehzahldifferenz oberhalb der Solldifferenz verkleinert werden. Natürlich kann der Grenzwert alternativ auch aus einer Summe einer Sollgröße und einem Anpassungssummanden gebildet werden, wobei der Anpassungssummand bei einer Drehzahldifferenz oberhalb der Solldifferenz verkleinert wird.

Um das Auftreten eines unerwünschten Schlupfes im Getriebe mit Sicherheit auszuschließen, erfolgt gemäß einer Ausführungsform der Erfindung eine Veränderung des Grenzwertes ausschließlich durch Erniedrigung desselben. Das bedeutet, dass, wenn einmal ein Schlupf erfasst wurde, die Bedingungen für das Schalten des Arbeitsdruckes auf den abgesenkten Wert beziehungsweise für das Reduzieren des Arbeitsdruckes in drei oder mehreren Stufen oder stufenlos dauerhaft verschärft werden, sobald einmal ein Schlupf erfasst wurde.

Gemäß einer alternativen Ausführungsform kann diese Verschärfung nach Ablauf einer vorbestimmten Zeitspanne oder nach Ablauf einer weiteren vorbestimmten Betriebsdauer des Schaltgetriebes aufgehoben werden, das heißt der Grenzwert wieder angehoben werden. Diese Anhebung kann andauernd schrittweise so lange erfolgen, bis erneut ein Schlupf erfasst wird, wobei der letzte Schritt dann rückgängig gemacht wird. Alternativ erfolgt eine Anhebung sofort auf den Grenzwert, der vor Ablauf der vorbestimmten Zeitspanne beziehungsweise Betriebsdauer zu der Schlupferfassung geführt hatte. Gemäß einer weiteren Ausführungsform erfolgt die Anhebung durch Setzen des Grenzwertes auf seinen Ausgangswert, sozusagen Standardwert, insbesondere indem der Anpassungsfaktor auf seinen Ausgangswert, insbesondere auf Eins gesetzt wird.

Zusätzlich oder alternativ ist es möglich, dass der erniedrigte Grenzwert manuell, insbesondere im Rahmen eines Services des Getriebes beziehungsweise des Fahrzeugs mit dem Getriebe erfolgt, insbesondere durch Rücksetzung auf den Ausgangswert. Beispielsweise kann eine Heraufsetzung beziehungsweise Rücksetzung immer dann erfolgen, wenn das Getriebeöl gewechselt wurde.

Gemäß einer Ausführungsform wird die Öltemperatur beziehungsweise allgemein die Temperatur des den Arbeitsdruck führenden Mediums erfasst, und ein Schalten des Arbeitsdrucks auf den abgesenkten Wert beziehungsweise ein Reduzieren des Arbeitsdruckes in drei oder mehr Stufen oder stufenlos wird nur dann durchgeführt, wenn die erfasste Temperatur innerhalb eines vorgegebenen Temperaturintervalls liegt.

Ferner kann vorteilhaft ausgenutzt werden, dass die das den Arbeitsdruck führende Medium fördernde Pumpe eine Bremsleistung erzeugt und im Getriebe beziehungsweise im Fahrzeug zwischen einem Traktionsbetrieb und einem Bremsbetrieb unterschieden werden. Im Bremsbetrieb, wenn ein besonders hohes Bremsmoment der Pumpe, insbesondere Ölpumpe, gewünscht ist, wird ein Schalten des Arbeitsdruckes auf den abgesenkten Wert beziehungsweise ein Reduzieren des Arbeitsdruckes ausgesetzt, auch wenn die anderen genannten Bedingungen vorliegen.

Insofern die Pumpe nicht stets mit dem Abtrieb beziehungsweise der Getriebeausgangswelle des Getriebes in Triebverbindung steht, kann es hierfür notwendig sein, die Pumpe nur für den Bremsvorgang mit der Getriebeausgangswelle zu koppeln.

Eine weitere die Zulässigkeit des Schaltens auf den abgesenkten Wert oder Reduzierens des Arbeitsdruckes beschreibende Größe, die als Eingangsgröße herangezogen werden kann, ist die Gangstellung beziehungsweise die Übersetzung im Schaltgetriebe. Zusätzlich oder alternativ kommt auch die Schaltstellung einer sogenannten Wandlereinlasssteuerung in Betracht. Immer dann, wenn der Zulauf zum hydrodynamischen Wandler abgesperrt ist, steigt der Systemdruck, sodass eine Druckabsenkung des Arbeitsdruckes bei niedrigeren Grenzwerten der wenigstens einen anderen genannten Eingangsgröße erfolgen kann. Auch die Steuerung anderer Verbraucher, die abgeschaltet werden, wobei der Systemdruck aufgrund des Wegfalls des Verbrauchers steigt, kann berücksichtigt werden.

Das Schalten des Arbeitsdruckes zwischen einem konstanten Wert und einem konstanten relativ hierzu kleineren abgesenkten Wert kann unter Berücksichtigung einer Hysterese erfolgen, das heißt das Rückschalten von dem kleineren abgesenkten Wert auf den konstanten Nennwert erfolgt bei einem vergleichsweise größeren Grenzwert der Eingangsgröße als das Runterschalten.

Insbesondere bei der ersten Alternative der Erfindung, bei welcher der Arbeitsdruck zwischen einem konstanten Nennwert und einem konstanten relativ hierzu kleineren abgesenkten Wert geschaltet wird, kann neben der Schlupfüberwachung die Zulässigkeit des Absenkens des Arbeitsdrucks durch fortlaufende Berechnung des erforderlichen Mindestarbeitsdruckes erfolgen. Hierfür kann aus dem Getriebeeingangsmoment, das heißt dem an der Getriebeeingangswelle anliegenden Moment, das an den einzelnen Schaltelementen übertragbare Moment berechnet werden, beispielsweise anhand eines Übersetzungsfaktors, der die Übersetzung zwischen der Getriebeeingangswelle und dem jeweiligen Schaltelement beschreibt, und insbesondere unter Berücksichtigung weiterer den erforderlichen Arbeitsdruck beschreibender Größen, beispielsweise der im Schaltelement wirkenden Fliehkraft, eines Sicherheitszuschlags, sowie der Kraft eines dem Arbeitsdruck als Schaltdruck entgegenwirkenden Federelementes.

Ferner kann bei einer konkreten durchzuführenden Schaltung geprüft werden, ob der Arbeitsdruck zu Beginn der Schaltung abgesenkt ist und ob diese Absenkung des Arbeitsdruckes auch im Zielgang möglich ist. Ist dies nicht der Fall oder ist der Arbeitsdruck zu Beginn der Schaltung nicht abgesenkt, dann wird die Schaltung mit nicht abgesenktem Arbeitsdruck durchgeführt.

Ebenso kann bei Ausfall eines notwendigen Signals zu einer die Zulässigkeit des Schaltens des Arbeitsdrucks auf den abgesenkten Wert oder Reduzierens des Arbeitsdrucks beschreibenden Größe das Schalten auf den abgesenkten Wert oder Reduzieren ausgesetzt werden.

Die Erfindung soll nachfolgend anhand der Figur exemplarisch erläutert werden.

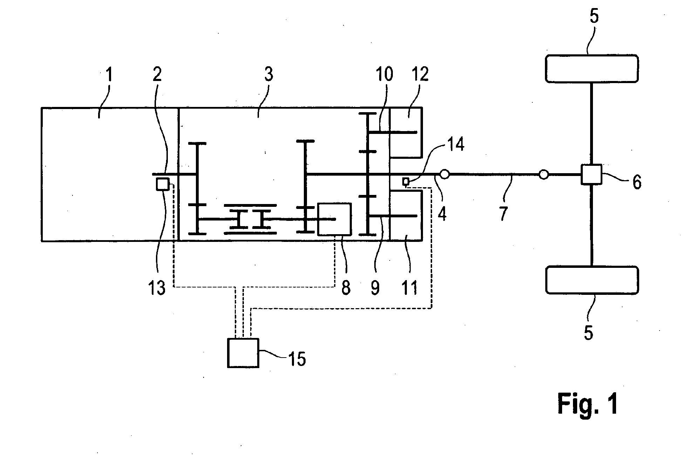

In der Figur 1 ist schematisch ein Verbrennungsmotor 1 dargestellt, der die Getriebeeingangswelle 2 eines Schaltgetriebes 3 eines Kraftfahrzeugs antreibt. Die Getriebeeingangswelle 2 kann über hier nicht weiter dargestellte verschiedene mechanische und/oder hydrodynamische Übersetzungen, also unter Schalten verschiedener Gangstufen, mit der Getriebeausgangswelle 4 antreibend verbunden werden. Die Getriebeausgangswelle 4 treibt Antriebsräder 5 des Kraftfahrzeugs an, beispielsweise unter Zwischenschaltung des hier dargestellten Differentialgetriebes 6 und der Kardanwelle 7.

Im Getriebe oder am Getriebe ist eine Ölpumpe 8 vorgesehen, welche Öl aus einem nicht näher dargestellten Getriebeölsumpf fördert, um dieses als den Arbeitsdruck führende Medium auf den notwendigen Arbeitsdruck zu bringen. In der Regel wird hierfür die Ölpumpe 8 gegen eine entsprechende Staueinrichtung, im Allgemeinen ein sogenanntes Arbeitsdruckventil (nicht dargestellt) fördern.

Die Ölpumpe 8 ist wahlweise, beispielsweise über die hier dargestellte Schiebemuffe, mit der Getriebeeingangswelle 2 oder der Getriebeausgangswelle 4 verbindbar. Beispielsweise erfolgt eine Verbindung mit der Getriebeausgangswelle 4 immer dann, wenn sich der Verbrennungsmotor 1 beziehungsweise das Schaltgetriebe 3 im Schubbetrieb oder Bremsbetrieb befindet, das heißt die Antriebsleistung von den Antriebsrädern 5 über die Getriebeausgangswelle 4 in das Schaltgetriebe 3 eingetragen wird. Hingegen kann im sogenannten Traktionsbetrieb, das heißt die Antriebsleistung wird von der Getriebeeingangswelle 2 auf die Getriebeausgangswelle 4 übertragen, die Ölpumpe 8 mit der Getriebeeingangswelle 2 verbunden werden.

In dem gezeigten Ausführungsbeispiel weist das Schaltgetriebe 3 einen Nebenabtrieb 9 und einen Nebenantrieb 10 auf. Am Nebenabtrieb 9 ist beispielsweise eine hydrodynamische Bremse (Retarder) 11 angeschlossen. Am Nebenantrieb 10 ist eine zweite Antriebsmaschine, beispielsweise ein Elektromotor 12. oder ein Dampfmotor angeschlossen.

Selbstverständlich ist die hier dargestellte Ausführungsform nur exemplarisch zu verstehen und es können Modifikationen hieran vorgenommen werden.

An der Getriebeeingangswelle 2 ist ein erster Drehzahlsensor 13 und an der Getriebeausgangswelle 4 ist ein zweiter Drehzahlsensor 14 vorgesehen. Die Drehzahlsensoren 13, 14 erfassen die Drehzahl der ihnen zugeordneten Welle 2, 4 und leiten diese an eine Steuervorrichtung 15 weiter. Die Steuervorrichtung 15, die eingerichtet ist, um ein erfindungsgemäßes Verfahren auszuführen, steuert die Einstellung des Arbeitsdruckes über die Ölpumpe 8.

Selbstverständlich können weitere Sensoren, beispielsweise ein Drehzahlsensor an der Getriebeeingangswelle 2 und/oder der Getriebeausgangswelle 4 vorgesehen sein, um die Einstellung des Arbeitsdruckes in Abhängigkeit der erfassten Größen, beispielsweise des Drehmomentes an der Getriebeeingangswelle 2 und/oder der Getriebeausgangswelle 4 zu steuern.

## Patentansprüche

1. Verfahren zur Einstellung des Arbeitsdruckes eines Getriebes (3), insbesondere Kraftfahrzeugschaltgetriebes, wobei das Getriebe (3) Kupplungen, Bremsen, Aktuatoren, eine hydrodynamische Kupplung und/oder einen hydrodynamischen Wandler aufweist, die wahlweise mit einem den Arbeitsdruck führenden Medium beaufschlagbar sind, um die Übersetzung der Drehzahl und/oder des Drehmomentes zwischen einer Getriebeeingangswelle (2) und einer Getriebeausgangswelle (4) durch Öffnen und Schließen der Kupplungen und/oder Bremsen, durch Betätigen der Aktuatoren und/oder durch hydrodynamische Leistungsübertragung mit der hydrodynamischen Kupplung und/oder dem hydrodynamischen Wandler zu variieren, wobei
der Arbeitsdruck zwischen einem konstanten Nennwert und einem konstanten relativ hierzu kleineren abgesenkten Wert schaltbar ist oder der Arbeitsdruck in drei oder mehr Stufen oder stufenlos von einem Nennwert auf einen abgesenkten Wert reduzierbar ist; wobei
eine Drehzahldifferenz zwischen der Getriebeeingangswelle (2) und der Getriebeausgangswelle (4) und/oder zwischen der Eingangsseite und Ausgangsseite wenigstens einer Kupplung, Bremse, der hydrodynamischen Kupplung und/oder dem hydrodynamischen Wandler erfasst und mit einer vorgegebenen Solldifferenz verglichen wird, und das Schalten oder Reduzieren des Arbeitsdruckes in Abhängigkeit des Ergebnisses des Vergleichs erfolgt;
**dadurch gekennzeichnet, dass** eine die Zulässigkeit des Schaltens auf den abgesenkten Wert oder Reduzierens des Arbeitsdrucks beschreibende Größe, insbesondere eine oder mehrere der nachfolgenden Größen
- das an der Getriebeeingangswelle (2) anliegende Drehmoment
- das an der Getriebeausgangswelle (4) anliegende Drehmoment
- die an der Getriebeeingangswelle (2) anliegende Leistung
- die an der Getriebeausgangswelle (4) anliegende Leistung
- die Drehzahl der Getriebeeingangswelle (2) und/oder der. Getriebeausgangswelle (4)
- die an einem Nebenantrieb (10) des Getriebes (3) eingespeiste Leistung und/oder das dort eingespeiste Moment einer Antriebsmaschine, insbesondere eines Elektromotors (12)
- das an einem Nebenabtrieb (9) des Getriebes (3) anliegende Drehmoment und/oder die dort anliegende Leistung
- das Motorschleppmoment
erfasst wird, für diese die Zulässigkeit des Schaltens oder Reduzierens beschreibende Größe ein Grenzwert vorgegeben wird, und das Schalten oder Reduzieren nur bei Erfassen einer die Zulässigkeit des Schaltens oder Reduzierens beschreibenden Größe unterhalb des Grenzwertes erfolgt, wobei der Grenzwert in Abhängigkeit des Ergebnisses des Vergleichs der Drehzahldifferenz mit der vorgegebenen Solldifferenz verändert wird.

2. Verfahren gemäß Anspruch 1, **dadurch gekennzeichnet, dass** der Grenzwert bei einer Drehzahldifferenz oberhalb der Solldifferenz erniedrigt wird.

3. Verfahren gemäß Anspruch 2, **dadurch gekennzeichnet, dass** der Grenzwert aus dem Produkt einer Sollgröße und einem Anpassungsfaktor oder aus der Summe einer Sollgröße und einem Anpassungssummanden gebildet wird, und der Anpassungsfaktor oder der Anpassungssummand bei einer Drehzahldifferenz oberhalb der Solldifferenz verkleinert wird.

4. Verfahren gemäß einem der Ansprüche 2 oder 3, **dadurch gekennzeichnet, dass** eine Veränderung des Grenzwertes ausschließlich durch Erniedrigung durchgeführt wird.

5. Verfahren gemäß einem der Ansprüche 2 oder 3, **dadurch gekennzeichnet, dass** der erniedrigte Grenzwert nach Ablauf einer vorbestimmten Zeitspanne oder Betriebsdauer des Schaltgetriebes (3) und/oder durch manuelle Betätigung, insbesondere bei einem Getriebeservice, erneut erhöht wird.

6. Verfahren gemäß der Ansprüche 3 und 5, **dadurch gekennzeichnet, dass** die Erhöhung durch Setzen des Anpassungsfaktors oder des Anpassungssummanden auf seinen Ausgangswert, beim Anpassungsfaktor insbesondere auf Eins erfolgt.

7. Verfahren gemäß einem der Ansprüche 1 bis 6, **dadurch gekennzeichnet, dass** die Temperatur des den Arbeitsdruck führenden Mediums, insbesondere Öl, erfasst wird und ein Schalten auf den abgesenkten Wert oder Reduzieren des Arbeitsdruckes nur innerhalb eines vorgegebenen Temperaturintervalls erfolgt.

8. Verfahren gemäß einem der Ansprüche 1 bis 7, **dadurch gekennzeichnet, dass** zwischen einem Traktionsbetrieb und einem Bremsbetrieb des Kraftfahrzeugs unterschieden wird und im Bremsbetrieb das Schalten auf den abgesenkten Wert oder Reduzieren des Arbeitsdruckes ausgesetzt wird.

9. Verfahren gemäß Anspruch 8, **dadurch gekennzeichnet, dass** der Arbeitsdruck durch eine vom Schaltgetriebe (3) angetriebene Pumpe (8) erzeugt wird und im Bremsbetrieb die Pumpe (8) mit der Getriebeausgangswelle (4) oder einer hievon angetriebenen Welle gekoppelt wird.

10. Verfahren gemäß einem der Ansprüche 1 bis 9, **dadurch gekennzeichnet, dass** die Drehzahldifferenz zwischen der Getriebeeingangswelle (2) und der Getriebeausgangswelle (4) und/oder zwischen der Eingangsseite und Ausgangsseite wenigstens einer Kupplung, Bremse, der hydrodynamischen Kupplung und/oder dem hydrodynamischen Wandler nach dem Schalten des Arbeitsdrucks auf den abgesenkten Wert oder dem Reduzieren des Arbeitsdruckes erfolgt und der Arbeitsdruck in Abhängigkeit des Ergebnisses des Vergleichs wieder erhöht wird.

11. Verfahren gemäß einem der Ansprüche 1 bis 10, **dadurch gekennzeichnet**, das das Schalten des Arbeitsdruckes auf den abgesenkten Wert oder das Reduzieren des Arbeitsdruckes in Abhängigkeit davon erfolgt, ob die hydrodynamische Kupplung und/oder der hydrodynamische Wandler und/oder ein anderer Verbraucher, der mit dem Arbeitsdruck führenden Medium, insbesondere als Arbeitsmedium, beaufschlagbar ist, ein- oder ausgeschaltet ist.

## Claims

1. A method for setting the operating pressure of a transmission (3), in particular a motor vehicle shift transmission, the transmission (3) having clutches, brakes, actuators, a hydrodynamic clutch, and/or a hydrodynamic converter, to which a medium conducting the operating pressure can selectively be applied, in order to vary the transmission ratio of the speed and/or the torque between a transmission input shaft (2) and a transmission output shaft (4) by opening and closing the clutches and/or brakes, by actuating the actuators, and/or by hydrodynamic power transmission using the hydrodynamic clutch and/or the hydrodynamic converter,
the operating pressure being switchable between a constant nominal value and a constant decreased value that is smaller in relation thereto, or the operating pressure being reducible in three or more steps or continuously from a nominal value to a decreased value;
a speed difference between the transmission input shaft (2) and the transmission output shaft (4) and/or between the input side and output side of at least one clutch, one brake, the hydrodynamic clutch, and/or the hydrodynamic converter being detected and compared to a predefined target difference, and the switching or reduction of the operating pressure being performed as a function of the result of the comparison; **characterized in that** a variable which describes the permissibility of the switching to the decreased value or reduction of the operating pressure, in particular one or more of the following variables:
- the torque applied to the transmission input shaft (2)
- the torque applied to the transmission output shaft (4)
- the power applied to the transmission input shaft (2)
- the power applied to the transmission output shaft (4)
- the speed of the transmission input shaft (2) and/or the transmission output shaft (4)
- the power supplied at a secondary drive (10) of the transmission (3) and/or the torque of a drive machine supplied there, in particular of an electric motor (12),
- the torque applied to a secondary output (9) of the transmission (3) and/or the power applied there
- the engine drag torque
is detected, a limiting value is specified for this variable, which describes the permissibility of the switching or reduction, and the switching or reduction is only performed upon detection of a variable, which describes the permissibility of the switching or reduction, below the limiting value, the limiting value being varied as a function of the result of the comparison of the speed difference to the predefined target difference.

2. The method according to Claim 1, **characterized in that** the limiting value is decreased in the event of a speed difference above the target difference.

3. The method according to Claim 2, **characterized in that** the limiting value is calculated from the product of a target variable and an adaptation factor or from the sum of a target variable and an adaptation summand, and the adaptation factor or the adaptation summand is decreased in the event of a speed difference above the target difference.

4. The method according to one of Claims 2 or 3, **characterized in that** the limiting value is varied exclusively by decrease.

5. The method according to one of Claims 2 or 3, **characterized in that** the decreased limiting value is increased again after passage of a predetermined time span or operating duration of the shift transmission (3) and/or by manual actuation, in particular during a transmission service.

6. The method according to Claims 3 and 5, **characterized in that** the increase is performed by setting the adaptation factor or the adaptation summand to its starting value, in the case of the adaptation factor in particular to one.

7. The method according to one of Claims 1 to 6, **characterized in that** the temperature of the medium conducting the operating pressure, in particular oil, is detected, and switching to the decreased value or reduction of the operating pressure is only performed within a predefined temperature interval.

8. The method according to one of Claims 1 to 7, **characterized in that** a differentiation is made between traction operation and braking operation of the motor vehicle, and the switching to the decreased value or reduction of the operating pressure is suspended in braking operation.

9. The method according to Claim 8, **characterized in that** the operating pressure is generated by a pump (8) driven by the shift transmission (3) and, in braking operation, the pump (8) is coupled to the transmission output shaft (4) or a shaft driven thereby.

10. The method according to one of Claims 1 to 9, **characterized in that** the speed difference between the transmission input shaft (2) and the transmission output shaft (4) and/or between the input side and output side of at least one clutch, brake, the hydrodynamic clutch, and/or the hydrodynamic converter is performed after the switching of the operating pressure to the decreased value or the reduction of the operating pressure and the operating pressure is increased again as a function of the result of the comparison.

11. The method according to one of Claims 1 to 10, **characterized in that** the switching of the operating pressure to the decreased value or the reduction of the operating pressure is performed as a function of whether the hydrodynamic clutch and/or the hydrodynamic converter and/or another consumer, to which the medium conducting the operating pressure can be applied, in particular as an operating medium, is turned on or off.

## Revendications

1. Procédé d'ajustage de la pression de service d'une transmission (3), en particulier une transmission manuelle de véhicule automobile, où la transmission (3) comprend des embrayages, des freins, des actionneurs, un embrayage hydrodynamique et/ou un convertisseur hydrodynamique, qui peuvent être soumis de manière sélective à l'action d'un milieu guidant la pression de service afin de modifier la démultiplication de la vitesse de rotation et/ou du couple de rotation entre un arbre d'entrée de transmission (2) et un arbre de sortie de transmission (4) par l'ouverture et la fermeture des embrayages et/ou des freins, par l'actionnement des actionneurs et/ou par la transmission de puissance hydrodynamique à l'aide de l'embrayage hydrodynamique et/ou du convertisseur hydrodynamique, où
la pression de service peut être commutée entre une valeur nominale constante et une valeur réduite constante inférieure à cette dernière ou la pression de service peut être diminuée en trois étapes ou plus ou en continu d'une valeur nominale à une valeur réduite ; où une différence de vitesse de rotation est détectée entre l'arbre d'entrée de transmission (2) et l'arbre de sortie de transmission (4) et/ou entre le côté entrée et le côté sortie d'au moins un embrayage, un frein, l'embrayage hydrodynamique et/ou le convertisseur hydrodynamique et est comparée à une différence théorique prédéfinie, la commutation ou la réduction de la pression de service se produisant en fonction du résultat de la comparaison, **caractérisé en ce que** l'on détecte un paramètre décrivant l'admissibilité de la commutation à la valeur abaissée ou de la réduction de la pression de service ; en particulier un ou plusieurs de paramètres suivants : le couple de rotation appliqué à l'arbre d'entrée de transmission (2), le couple de rotation appliqué à l'arbre de sortie de transmission (4), la puissance appliquée à l'arbre d'entrée de transmission (2), la puissance appliquée à l'arbre de sortie de transmission (4), la vitesse de rotation de l'arbre d'entrée de transmission (2) et/ou de l'arbre de sortie de transmission (4), la puissance injectée dans un entraînement auxiliaire (10) de la transmission (3) et/ou le couple d'un moteur d'entraînement injecté dans celui-ci, en particulier d'un moteur électrique (12), le couple appliqué à un entraînement auxiliaire (9) de la transmission (3) et/ou la puissance appliquée ici, le couple de frein moteur, pour laquelle on prédétermine le paramètre décrivant l'admissibilité de la commutation ou de la réduction, et l'ouverture ou la réduction peut se produire uniquement après détection d'un paramètre décrivant l'admissibilité de la commutation ou de la réduction qui tombe au-dessous de la valeur limite, où la valeur limite est modifiée en fonction du résultat de la comparaison de la différence de vitesse de rotation avec la différence théorique prédéfinie.

2. Procédé selon la revendication 1, **caractérisé en ce que** la valeur limite est abaissée lorsque une différence de vitesse de rotation est supérieure à la différence théorique.

3. Procédé conforme à la revendication 2, **caractérisé en ce que** la valeur limite est le produit d'une variable de consigne et d'un facteur d'adaptation ou bien de la somme d'une variable de consigne et d'un terme d'adaptation, et le facteur d'adaptation ou le terme d'adaptation est réduit lorsque la différence de vitesse de rotation est supérieure à la différence théorique.

4. Procédé selon l'une des revendications 2 ou 3, **caractérisé en ce que** la valeur limite peut seulement être modifiée vers le bas.

5. Procédé selon l'une des revendications 2 ou 3, **caractérisé en ce que** la valeur limite est de nouveau augmentée après expiration d'un laps de temps donné ou d'une durée d'exploitation donnée de la transmission manuelle (3) et/ou par commande manuelle, en particulier d'un entretien de la transmission.

6. Procédé selon les revendications 3 et 5, **caractérisé en ce que** ladite augmentation consiste à donner au facteur d'adaptation ou le terme d'adaptation sa valeur initiale, dans le cas du facteur d'adaptation la valeur un.

7. Procédé selon l'une des revendications 1 à 6, **caractérisé en ce que** l'on détecte la température du milieu guidant la pression de service, en particulier de l'huile et que l'on passe à la valeur abaissée ou que l'on réduit la pression de service seulement dans une plage de température prédéterminée.

8. Procédé selon l'une des revendications 1 à 7, **caractérisé en ce que** l'on distingue entre un mode de traction et un mode de freinage du véhicule et en mode de freinage l'on arrête la commutation à la valeur abaissée ou la réduction de la pression de service.

9. Procédé conforme à la revendication 8, **caractérisé en ce que** la pression de service est générée par une pompe (8) entraînée par la transmission manuelle (3) et en mode freinage la pompe (8) est couplée à l'arbre de sortie de transmission (4) et l'arbre entraînée à partir de celle-ci.

10. Procédé selon l'une des revendications 1 à 9, **caractérisé en ce que** la différence de vitesse de rotation est détectée entre l'arbre d'entrée de transmission (2) et l'arbre de sortie de transmission (4) et/ou entre le côté entrée et le côté sortie d'au moins un embrayage, un frein, l'embrayage hydrodynamique et/ou le convertisseur hydrodynamique et/ou le convertisseur hydrodynamique après la commutation de la pression de service à la valeur abaissée ou la réduction de la pression de service et l'on pression de service est de nouveau augmentée en fonction du résultat de la comparaison.

11. Procédé selon l'une des revendications 1 à 10, **caractérisé en ce que** la commutation de la pression de service à la valeur abaissée ou bien la réduction de la pression de service se produisent en fonction de celle-ci, selon que l'embrayage hydrodynamique et/ou le convertisseur hydrodynamique et/ou un autre consommateur pouvant être actionné par le milieu guidant la pression de service, en particulier comme milieu de service, est sollicité ou non.
